# EUROPEAN PATENT APPLICATION

(11) **EP 4 679 043 A1**
(43) Date of publication of application: **14.01.2026**
(21) Application number: 24188254.7
(22) Date of filing: 12.07.2024
(51) Int. Cl.: G01H 9/00

(54) **A FIBEROPTIC ACOUSTICS RECEIVER, AN ASSEMBLY AND A METHOD**

(71) Applicant: Nederlandse Organisatie voor toegepast-natuurwetenschappelijk Onderzoek TNO, 2595 DA 's-Gravenhage (NL)
(72) Inventor: Quesson, Benoit André Jacques, 2595 DA 's-Gravenhage (NL); Van Neer, Paul Louis Maria Joseph, 2595 DA 's-Gravenhage (NL); Fillinger, Laurent, 2595 DA 's-Gravenhage (NL); Cheng, Lun-Kai, 2595 DA 's-Gravenhage (NL); De Jong, Willem, 2595 DA 's-Gravenhage (NL)
(74) Representative: V.O.

(57) **Abstract**

The invention relates to a fiberoptic acoustics receiver for receiving acoustic signals. The receiver comprises an acoustic resonator body, and an optical fiber wound relative to the acoustic resonator body. The fiberoptic acoustics receiver further has a pre-defined resonance sensitivity based on design selectivity in terms of material and/or shape of the acoustic resonator body and/or geometry of the optical fiber.

## Description

The present invention relates to a fiberoptic acoustics receiver for receiving acoustic signals.

Fiberoptic acoustics receivers are used e.g. in underwater acoustics, the field of medical technology, non-destructive ultrasonic testing, such as for example for the detection of delamination, damage, stiffness changes and/or rust in large structures such as bridges, industrial structures or offshore structures. Specifically, fiberoptic acoustics receivers can be applied for receiving guided acoustic or elastic waves in non-destructive ultrasonic testing.

Generally, a fiberoptic acoustics receiver is provided with a mandrel and an optical fiber wound relative to the mandrel. The mandrel may exhibit variations in winding diameter in response to pressure variations exerted on the mandrel causing also the optical fiber to deform. The length of the optical fiber can be monitored by applying optical sensors e.g. in-line reflectors such as FBGs at ends of the optical fiber to be read out by specific measurement systems, e.g. an interferometric sensing system.

It is an object of the invention to provide an improved fiberoptic acoustics receiver, in particular to provide a fiberoptic acoustics receiver having an improved performance. It is in particular an object to provide a fiberoptic acoustics receiver having an improved sensitivity and/or a specific Q factor such as a custom frequency bandwidth and sensitivity combination.

Thereto, according to an aspect of the invention, fiberoptic acoustics receiver for receiving acoustic signals is provided, comprising an acoustic resonator body, and an optical fiber wound relative to the acoustic resonator body, wherein the fiberoptic acoustics receiver has a pre-defined resonance sensitivity based on design selectivity in terms of material and/or shape of the acoustic resonator body and/or geometry of the optical fiber.

The invention is at least partially based on the insight that material and shape of the acoustic resonator body, as well as the geometry of the optical fiber can be adapted so as to match a specific measurement circumstance, thereby improving sensitivity and/or a specific Q factor such as a custom frequency bandwidth and sensitivity combination, e.g. optimizing in directivity of a sensed acoustic field, so as to effectively enhance the performance of the fiberoptic acoustics receiver. As an example, an omnidirectional sensitivity may be obtained if the sensor has an extension smaller or equal to half the wavelength of the acoustic field. As another example, a directivity sensitivity will generally increase when the extension of the sensor increases, especially increasing the sensitivity to a beam within which the sensor is located and oriented.

Advantageously, the acoustic resonator body may include a plurality of materials having mutually different acoustic impedances for setting a predefined Q factor and/or resonance frequencies. Then, e.g. an overall resonance sensitivity, e.g. having a larger bandwidth than the respective bandwidths of the individual resonance sensitivities of the individual resonating materials can be obtained. Further, separate resonance frequencies can be set, adapting the sensitivity to specific frequency domains.

As another example, the plurality of materials may be selected for setting a predefined average density value of the acoustic resonator body.

Advantageously, a Q factor is at least partly set by selecting a material or materials having a specific loss modulus or viscosity. Alternatively or additionally, materials can be selected based on other physical properties such as thermal capacity.

In a preferred embodiment, the plurality of materials are located in a mainly concentric or mainly parallel layered geometry. However, other geometries are also applicable such as concentric blocks. Further, materials can be mixed.

The acoustic impedance may e.g. include a discrete step or a smooth transition profile, e.g. based on a manufacturing method.

Further, the acoustic resonator body may have any shape, a mainly spherical shape, a mainly cylinder shape, a mainly toroidal shape, a mainly pyramidal shape or a mainly annular shape, e.g. optimized for a manufacturing method.

In practice, the optical fiber may be wound around or embedded in the acoustic resonator body, or on an inner wall of the acoustic resonator body defining a cavity surrounded by the acoustic resonator body. In particular, the optical fiber may e.g. be sandwiched between subsequent layers of materials having mutually different acoustic impedances. Similarly, e.g. for the purpose of adding resonance characteristics, a layer may cover at least a portion of the optical fiber.

Preferably, a plurality of optical fibers may be wound with mutually different winding diameters or with mutually different fiber diameters, thus enabling a nested, compact design of resonators.

As an example, the acoustic resonator body and a first optical fiber are tuned for receiving a first guided mode signal, while the acoustic resonator body and a second optical fiber are tuned for receiving a second guided wave signal. The receiver can be adapted to measure various first and second guided mode signals. In a first implementation, the first guided mode signal is an anti-symmetric guided mode signal, while the second guided mode signal is a symmetric guided mode signal. In a second implementation, the first guided mode signal is a first symmetric mode signal, while the second guided mode signal is a second higher order symmetric mode signal.

Further, in practice, ends of the optical fibers are connectable to an interferometry-based measurement system, for reading out length variations between said fiber ends.

In case of measuring guided modes, e.g. in plates or pipes, respective receivers may be located at maximum and/or minimum displacement nodes, respectively, in case of symmetric mode signals. Further, respective receivers may be located at intertwined locations in case of anti-symmetric mode signals. Further, a plurality of receivers may be located in a volume having a maximum dimension that is equal to or smaller than half a resonance wavelength, then preserving coherence of an acoustic wavefront to be detected.

The invention also relates to a method of forming a fiberoptic acoustics receiver.

Other advantageous embodiments according to the invention are described in the following claims.

The invention will be further elucidated on the basis of exemplary embodiments which are represented in the drawings. The exemplary embodiments are given by way of non-limitative illustration of the invention. In the drawings:
Fig. 1 shows a schematic view of a fiberoptic acoustics receiver according to a first embodiment of the invention;
Fig. 2 shows a schematic view of a fiberoptic acoustics receiver according to a second embodiment of the invention;
Fig. 3 shows a schematic view of a fiberoptic acoustics receiver according to a third embodiment of the invention;
Fig. 4 shows a schematic view of a fiberoptic acoustics receiver according to a fourth embodiment of the invention;
Fig. 5 shows a schematic view of a first assembly of fiberoptic acoustics receivers according to the invention;
Fig. 6a shows a schematic view of a second assembly of fiberoptic acoustics receivers according to the invention;
Fig. 6b shows a schematic view of a third assembly of fiberoptic acoustics receivers according to the invention;
Fig. 7 shows a schematic view of a fiberoptic acoustics receiver according to a fifth embodiment of the invention;
Fig. 8 shows a schematic view of a fourth assembly of fiberoptic acoustics receivers according to the invention, and
Fig. 9 shows a flow chart of a method according to the invention.

In the figures identical or corresponding parts are represented with the same reference numerals. The drawings are only schematic representations of embodiments of the invention, which h are given by manner of non-limited examples.

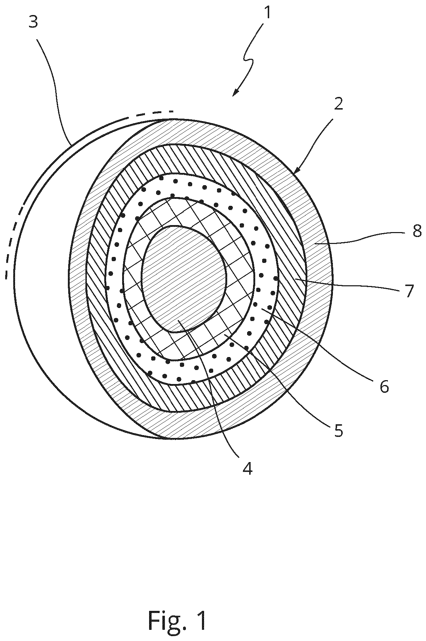

Figure 1 shows a schematic view of a fiberoptic acoustics receiver according to a first embodiment of the invention. The receiver 1 includes an acoustic resonator body 2, and an optical fiber 3 wound relative to the acoustic resonator body 2. The fiberoptic acoustics receiver 1 has a pre-defined resonance sensitivity based on design selectivity in terms of material and/or shape of the acoustic resonator body 2 and/or geometry of the optical fiber 3. Generally, the acoustic resonator body material and/or shape and/or the geometry of the optical fiber 3 have been designed such that a predefined resonance sensitivity is obtained, e.g. in terms of Q factor or bandwidth sensitivity, directional sensitivity. The diameter or another dimension of a spatial extension of the acoustic resonator body 2 may be circa half of the operating acoustic wavelength.

In the shown first embodiment, the acoustic resonator body 2 includes a plurality of materials having mutually different acoustic impedances, e.g. for the purpose of setting a predefined Q factor and/or resonance frequencies. As an example, the respective resonance sensitivities of the respective materials can be combined to an overall resonance sensitivity, e.g. having a larger bandwidth than the respective bandwidths of the individual resonance sensitivities of the individual resonating materials.

In principle, the plurality of materials may be selected for setting a predefined average density value, e.g. circa 1000 kg / m³ e.g. to match physical circumstances in an area of application. However, the plurality of materials may alternatively or additionally be selected for setting another predefined physical parameter, e.g. a predefined average heat capacity.

Further, a Q factor or bandwidth sensitivity may at least partly be set by selecting a loss modulus or viscosity of the applied materials.

In the shown first embodiment, the acoustic resonator body 2 is mainly spherical shaped. In Fig. 1, the plurality of materials are located in a mainly concentric layered geometry. Specifically, in the embodiment shown in Fig. 1, the body 2 contains a central ball 4 made from a first material, a first shell layer 5 made from a second material and enclosing the central ball 4, a second shell layer 6 made from a third material and enclosing the first shell layer 5, a third shell layer 7 made from a fourth material and enclosing the second shell layer 6, and a fourth shell layer 8 made from a fifth material and enclosing the third shell layer 7.

The first, second, third, fourth shell layers 5-8 are concentric to the central ball 4 and to each other. In another embodiment, more or less shell layers can be applied. The layer thicknesses of the respective shell layers 5-8 may be uniform or mutually different.

Each of the plurality of materials has an acoustic impedance, and therefore forms a resonator that might be tuned to a respective acoustic wavelength or frequency. The acoustic impedances of the central ball 4 and the respective shell layers 5-8 are mutually different. Further, generally, the acoustic impedance may have a discrete step or smooth transition profile, in particular in a transition area between subsequent shell layers 5-8. The acoustic impedances of subsequent layers may be alternating or monotonically increasing or decreasing.

The concentrically arranged or nested shell layers 5-8 in principle have the same resonances in all spatial directions. Therefore, the fiberoptic acoustics receiver 1 shown in Fig. 1 is a mainly omnidirectional sensor.

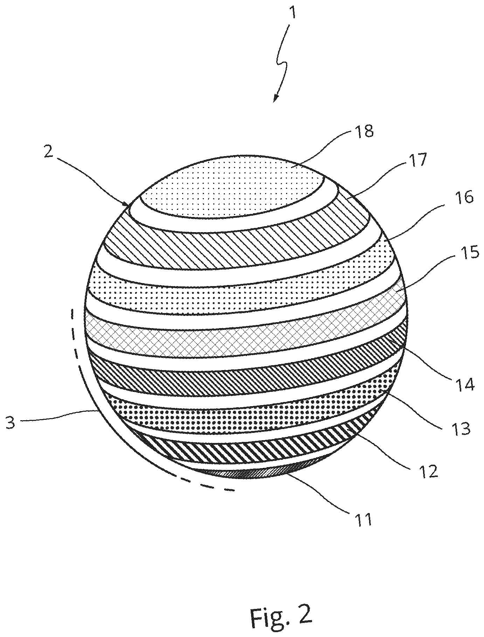

Figure 2 shows a schematic view of a fiberoptic acoustics receiver 1 according to a second embodiment of the invention. Here, the plurality of materials are located in a mainly parallel layered geometry. In the shown embodiment, the acoustic resonator body 2 contains a first, second, third, fourth, fifth, six, seventh and eight plane layer 11-18 stacked on top of each other, forming a mainly spherical shaped acoustic resonator body 2. The thickness of the individual layers 11-18 is mainly similar or the same. However, alternatively, the thickness of the layers 11-18 may be different from each other.

Due to the stacked structure of the acoustic resonator body 2 in the second embodiment, resonance sensitivity has a directionality. In other words, the fiberoptic acoustics receiver 1 shown in Fig. 2 is a mainly directional sensor.

Further, the geometric constellation of the plurality of materials may be mainly concentric or mainly parallel layered. However, other shapes are also possible. As an example, the location of materials may be mirrored in a plane of symmetry of the acoustic resonator body 2. In this respect it is noted that the optical fiber 3 also has mechanical properties potentially having resonance characteristics contributing to the overall resonance sensitivity of the receiver 1.

A first layer of material may be selected to resonate, while a second layer of material may be selected to muffle resonance oscillations. The design of the layers may be customized to combine various resonant frequencies and to selected respective Q factor of the respective resonating layers to obtain a desired bandwidth. Generally, when increasing the Q factor, the sensitivity at a particular frequency is enhanced while the bandwidth decreases. Similarly, when decreasing the Q factor, the sensitivity at a particular frequency reduces while the bandwidth increases. Further, the directivity of the various resonances may coincide or differ. As an example, the directivity of a first resonance may be angled with respect to the directivity of a second resonance.

In the embodiment shown in Figs. 1-2, the optical fiber 3 is wound around the acoustic resonator body 2. However, the optical fiber 3 may also be wound on an inner wall of the acoustic resonator body 2 defining a cavity surrounded by the acoustic resonator body 2. Further, the optical fiber 3 may be embedded in the acoustic resonator body 2. In the latter case, the optical fiber 3 may be sandwiched between subsequent layers of materials having mutually different acoustic impedances. Also, the optical fiber 3 may be wounded and/or sandwiched between multiples layers at once.

Further, the receiver 1 may include a layer that covers at least a portion of the optical fiber 3, or covers the optical fiber 3 completely. Then, the acoustic impedance of said covering layer may to resonance characteristics. In principle, the optical fibers may have the same or different winding diameters.

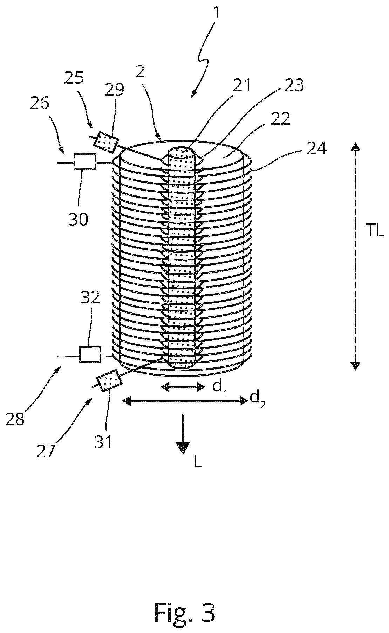

Figure 3 shows a schematic view of a fiberoptic acoustics receiver 1 according to a third embodiment of the invention. Here, the acoustic resonator body 2 is mainly cylinder shaped. Again, the resonator body 2 is formed from a plurality of materials. The plurality of materials are formed as concentric, nested cylinders. In the shown embodiment, two cylinders are nested, including a first cylinder shaped first material 21 and an annular shaped second material 22 enclosing the first cylinder 21. The receiver 1 has a first optical fiber 23 wound around the first cylinder 21, and a second optical fiber 24 wound around the annular shaped second material 22. Then, the first optical fiber 23 and the second optical fiber 24 are wound or coiled with mutually different winding diameters. The first and second optical fibers 23, 24 each have first ends 25, 26 and second ends 27, 28 provided with FBGs or other optical sensors 29, 30, 31, 32, respectively.

The winding diameter d1, of the first optical fiber 23 and the winding diameter d2 of the second optical fiber 24 can be tuned to half of the operating resonance wavelength, similar to the winding diameter of the optic fiber 3 in the first and second embodiments. Further, the optical fibers 23, 24 coiled around the cylinder 21 and ring 22 can be used as a damping layer or additional damping layers can be added on top of the optic fibers 23, 24.

Within the context of the present application, a winding diameter of an optic fiber is meant to indicate a diameter of a coil formed by the optic fiber. On the other hand, an optic fiber diameter is meant to indicate a diameter of the optic fiber itself, such as a diameter of a core and cladding forming a so-called bare fiber or optical waveguide, the diameter of the core and cladding structure ranging for a normal single mode glass fiber from 125 micrometer to as thin as 40 micrometer, or even less than 40 micrometer. As an another example, the diameter of the optic fiber itself may mean the diameter of a combined core, cladding and coating of a fiber.

In principle, the cylinder 21 and the ring 22 can be closed or open at their longitudinal ends. Further, the cylinder 21 and the ring 22 may be completely filled forming a solid structure, or hollow. The first and second optical fibers 23, 24 can be read out individually, or in combination, e.g. upon connecting the first and second optical fibers 23, 24 in series.

The directivity sensitivity of the third embodiment in a direction transverse to a longitudinal direction L of the receiver 1 is limited, due to the cylinder shape. In the shown third embodiment, the structure extends along the longitudinal direction L over a length TL that is larger than circa twice the operating wavelength, thereby rendering the sensitivity of the receiver 1 directive. The directivity can further be changed by applying an adaptive, non-uniform coiling pattern of the first and/or second optic fiber 23, 24.

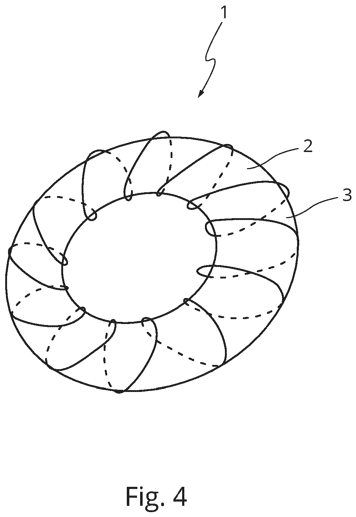

Figure 4 shows a schematic view of a fiberoptic acoustics receiver 1 according to a fourth embodiment of the invention. Here, the acoustic resonator body 2 is mainly toroidal shaped. Such resonator bodies can again be nested or positioned angled relative to each other to generated a directivity sensitivity.

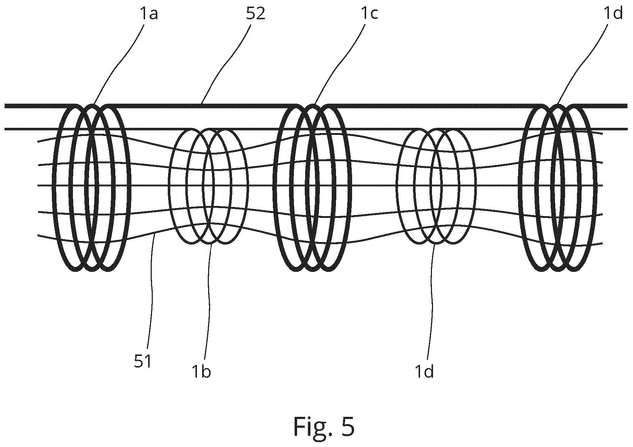

Figure 5 shows a schematic view of a first assembly of fiberoptic acoustics receivers 1a-e according to the invention. The first assembly is applied to measure a so-called symmetric guided mode wave 51 e.g. in pipes. The first assembly includes a first set of fiberoptic acoustics receivers 1a,c,e that are located at expected maximum displacement nodes, and a second set of fiberoptic acoustics receivers 1b,d that are located at expected minimum displacement nodes, alternating with the fiberoptic acoustics receivers 1a,c,e of the first set, in order to tune and use the difference in displacement shape between the modes to maximize the fiber elongation, not let them cancel out each other. The first set of fiberoptic acoustics receivers 1a,c,e each include a subset of receivers arranged circumferentially around the pipes. Similarly, the second set of fiberoptic acoustics receivers 1b,d each include a subset of receivers arranged circumferentially around the pipes. The first assembly also includes a first readout line 52 for reading out the first set of fiberoptic acoustics receivers 1a,c,e, as well as a second readout line 53 for reading out the second set of fiberoptic acoustics receivers 1b,d.

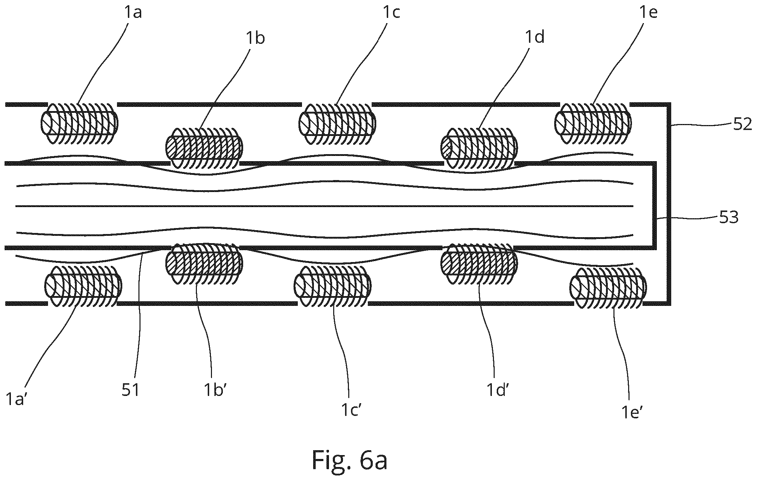

Figure 6a shows a schematic view of a second assembly of fiberoptic acoustics receivers 1a-e according to the invention. Also the second assembly is applied to measure a symmetric guided mode wave 51 e.g. in pipes or plates. Here, a first set of fiberoptic acoustics receivers 1a,a',c,c',e,e' are located at opposite sides of the measurement setup sandwiching therebetween a pipe, plate or other structure wherein the symmetric guided mode wave 51 is present. The first set of fiberoptic acoustics receivers 1a,a',c,c',e,e' is located at expected maximum displacement nodes. Similarly, a second set of fiberoptic acoustics receivers 1b,b',d,d' are located at the opposite sides of the measurement setup, however at expected minimum displacement nodes, and again alternating with the fiberoptic acoustics receivers 1a,c,e of the first set.

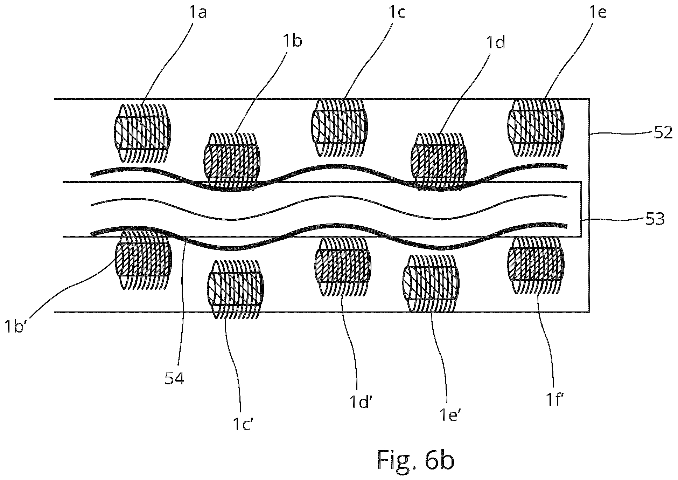

Figure 6b shows a schematic view of a third assembly of fiberoptic acoustics receivers 1a-e according to the invention. The third assembly is applied to measure a so-called anti-symmetric guided mode wave 54 e.g. in pipes or plates. Again, the first and second sets of fiberoptic acoustics receivers 1a,a',b,b',c,c',d,d',e,f' are located at the opposite sides of the measurement setup sandwiching therebetween a pipe, plate or other structure wherein the anti-symmetric guided mode wave 54 is present, again such that, at both sides, the fiberoptic acoustics receivers of the first set and the second set alternate, however such that the receivers of the first and second set on one side are shifted with respect to corresponding ones on the other side, so as to maximize the fiber elongation, not let them cancel out each other. In the shown embodiment, at one side, receivers of a first set 1a,c,e alternate with receivers of the second set 1b,d, while on the opposite side, receivers of the second set 1b',d',f' alternate with receivers of the first set 1c',e'. Then, respective receivers are located at intertwined locations.

It is noted that a first set of receivers and a second set of receivers can be applied in another manner, e.g. such that the first set of receivers are tuned for receiving a first symmetric mode signal, while a second set of receivers are tuned for receiving a second higher order symmetric mode signal or a higher order anti-symmetric mode signal.

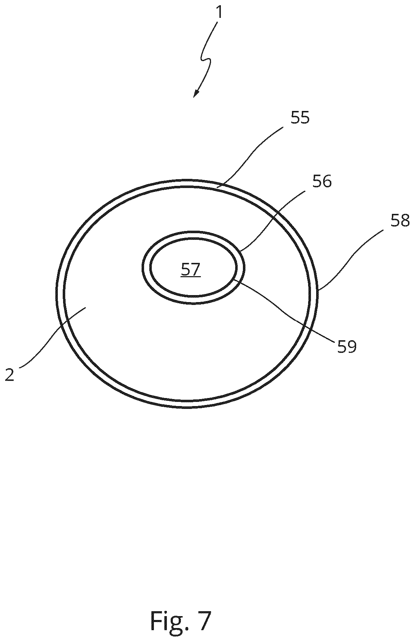

Figure 7 shows a schematic view of a fiberoptic acoustics receiver 1 according to a fifth embodiment of the invention. Here, the acoustic resonator body 2 is mainly annular shaped having a radial outer wall 55 and a radial inner wall 56 enclosing a cylinder shaped cavity 57. The radial outer wall 55 and the radial inner wall 56 are both wound by respective optical fibers 58, 59. Due to the presence of optical fibers 58, 59 on both radial walls 55, 56 of the acoustic resonator body 2, the receiver 1 has an enhanced sensitivity.

It is noted that the acoustic resonator body 2 may have various shapes, examples of which have been illustrated in Figs 1, 2, 3, 4 and 7. However, other shapes are also possible, e.g. a mainly pyramidal shape, a mainly block shape, a mainly concave shape, a mainly convex shape or another shape.

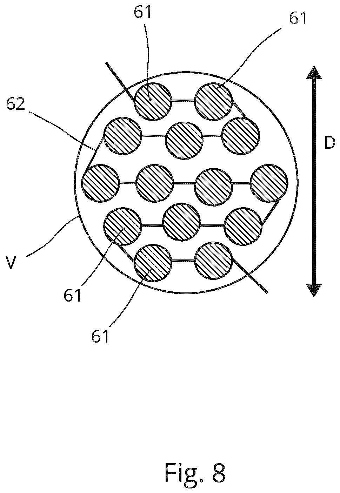

Figure 8 shows a schematic view of a fourth assembly of fiberoptic acoustics receivers 61 according to the invention. The receivers 61 have been integrated on an optic fiber 62 and located within a volume V having a maximum dimension D that is equal to or smaller than half an operating resonance wavelength.

As any acoustic wavefront in a half frequency area or volume is coherent, measurement data of the assembly of fiberoptic acoustics receivers 61 can be summed to increase the signal level. Such configuration may be particularly relevant for lower operating frequencies corresponding to relatively high operating wavelengths.

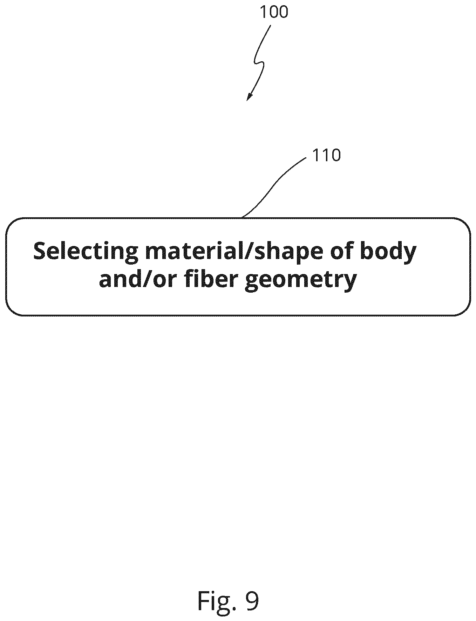

Figure 9 shows a flow chart of a method 100 according to the invention. The method 100 is used for forming a fiberoptic acoustics receiver. The method 100 comprises a step of selecting 110 a material and/or a shape of the acoustic resonator body and/or a geometry of the optical fiber corresponding to a pre-defined resonance sensitivity.

The above described fiber optic acoustics receiver may advantageously be used in non-destructive ultrasonic testing, such as for example for the detection of any delamination, damage, stiffness changes and/or rust in large structures such as bridges, industrial structures or offshore structures. Specifically, the optic acoustics receiver can advantageously be applied for receiving guided acoustic or elastic waves in non-destructive ultrasonic testing. Here, ends of the optical fibers may be connectable to an interferometry-based measurement system.

It is noted that, in principle, the above described fiber optic acoustics receiver can also be in other fields, e.g. in geophysical or marine exploration, or in the medical field.

Various variations are possible. It will be clear to the skilled person that the invention is not limited to the exemplary embodiment represented here. Many variations are possible.

Such variants will be apparent for the person skilled in the art and are considered to fall within the scope of the invention as defined in the following claims.

## Claims

1. A fiberoptic acoustics receiver for receiving acoustic signals, comprising:
- an acoustic resonator body, and
- an optical fiber wound relative to the acoustic resonator body,
wherein the fiberoptic acoustics receiver has a pre-defined resonance sensitivity based on design selectivity in terms of material and/or shape of the acoustic resonator body and/or geometry of the optical fiber.

2. A fiberoptic acoustics receiver according to claim 1, wherein the acoustic resonator body includes a plurality of materials having mutually different acoustic impedances for setting a predefined Q factor and/or resonance frequencies.

3. A fiberoptic acoustics receiver according to claim 2, wherein the plurality of materials have been selected for setting a predefined average density value.

4. A fiberoptic acoustics receiver according to claim 2 or 3, wherein a Q factor is at least partly set by selecting a loss modulus or viscosity.

5. A fiberoptic acoustics receiver according to claim 2, wherein the plurality of materials are located in a mainly concentric or mainly parallel layered geometry.

6. A fiberoptic acoustics receiver according to claim 2 or 3, wherein the acoustic impedance has a discrete step or smooth transition profile.

7. A fiberoptic acoustics receiver according to any of the preceding claims, wherein the acoustic resonator body is mainly spherical shaped, mainly cylinder shaped, mainly toroidal shaped, mainly pyramidal shaped or mainly annular shaped.

8. A fiberoptic acoustics receiver according to any of the preceding claims, wherein the optical fiber is wound around or embedded in the acoustic resonator body, or on an inner wall of the acoustic resonator body defining a cavity surrounded by the acoustic resonator body.

9. A fiberoptic acoustics receiver according to claim 8, wherein the optical fiber is sandwiched between subsequent layers of materials having mutually different acoustic impedances.

10. A fiberoptic acoustics receiver according to any of the preceding claims, wherein a layer covers at least a portion of the optical fiber.

11. A fiberoptic acoustics receiver according to any of the preceding claims, comprising a plurality of optical fibers wound with mutually different winding diameters or fiber diameters.

12. A fiberoptic acoustics receiver according to claim 11, wherein the acoustic resonator body and a first optical fiber are tuned for receiving a first guided wave signal, in particular an anti-symmetric guided mode signal or a first symmetric mode signal, and wherein the acoustic resonator body and a second optical fiber are tuned for receiving a second guided wave signal, in particular a symmetric guided mode signal or a second higher order symmetric mode signal or a higher order anti-symmetric mode signal.

13. A fiberoptic acoustics receiver according to any of the preceding claims, wherein ends of the optical fibers are connectable to an interferometry-based measurement system.

14. An assembly of fiberoptic acoustics receivers according to any of the preceding claims, wherein respective receivers are located at maximum and/or minimum displacement nodes, respectively, in case of symmetric mode signals, and wherein respective receivers are located at intertwined locations in case of anti-symmetric mode signals, or wherein a plurality of receivers are located in a volume having a maximum dimension that is equal to or smaller than half a resonance wavelength.

15. A method of forming a fiberoptic acoustics receiver according to any of the preceding claims 1-13, comprising a step of selecting a material and/or a shape of the acoustic resonator body and/or a geometry of the optical fiber corresponding to a pre-defined resonance sensitivity.
